# EUROPEAN PATENT APPLICATION

(11) **EP 4 597 473 A1**
(43) Date of publication of application: **06.08.2025**
(21) Application number: 23872520.4
(22) Date of filing: 28.09.2023
(51) Int. Cl.: G08G 1/16, B60W 40/08, B60W 50/14

(54) **DRIVING ASSISTANCE DEVICE**

(30) Priority: 28.09.2022 JP 2022155565
(71) Applicant: TOYOTA JIDOSHA KABUSHIKI KAISHA, Toyota-shi Aichi 471-8571 (JP); AISIN CORPORATION, Kariya-shi, Aichi 448-8650 (JP)
(72) Inventor: MAEHARA, Makoto, Toyota-shi, Aichi 471-8571 (JP); TONUMA, Dai, Toyota-shi, Aichi 471-8571 (JP); MORITA, Takanori, Kariya-shi, Aichi 448-8650 (JP); HOSHINO, Tsuyoshi, Kariya-shi, Aichi 448-8650 (JP); TOMOSUE, Kazuhiro, Kariya-shi, Aichi 448-8650 (JP)
(74) Representative: Cabinet Beau de Loménie
(86) International application number: PCT/JP2023/035389
(87) International publication number: WO 2024/071298

(57) **Abstract**

A processor 152 of an ECU150 includes a line-of-sight estimation unit 152a that estimates a direction of a line of sight of a driver of a vehicle, a first looking-aside determination unit 152b that determines whether the driver is looking aside, based on predetermined determination logic, when a line of sight of the driver is directed to a first looking-aside area deviating from a vehicle traveling direction, and a second looking-aside determination unit 152c that determines whether the driver is looking aside, based on predetermined determination logic different from the predetermined determination logic of the first looking-aside determination unit 152b, when a line of sight of the driver is directed to a second looking-aside area deviating from a vehicle traveling direction.

## Description

### FIELD

The present invention relates to a driving assistance device.

### BACKGROUND

Conventionally, it has been known to detect a line-of-sight direction of a user, and determine whether the user is in a looking-aside state, based on a time during which a line of sight is directed to a direction other than a direction in which the user needs to look during driving (for example, see PTL 1).

### [CITATION LIST]

### [PATENT LITERATURE]

[PTL 1] Japanese Unexamined Patent Publication (Kokai) No. 2018-108784

### SUMMARY

### [TECHNICAL PROBLEM]

However, there is a problem in that, when looking-aside by a driver is determined based on a direction to which a line of sight is directed, the direction of the line of sight caused by driving behavior of the driver is determined as looking-aside. For example, a driver's act of visually confirming an inner mirror (rear view mirror) or a door mirror is due to driving behavior for checking to the rear. However, there is a problem in that the act is determined as looking-aside. Then, when a warning or the like are given for the act, the driver may have feelings of distrust or discomfort.

Further, even when the driver is looking in a direction in which the driver needs to look during driving, there is a case where the driver is staring at the inner mirror, the door mirror, or the like regardless of driving behavior. Such a case should be determined as looking-aside instead of normal driving behavior, and a warning should be given to the user. However, in the technique described in the above-described PTL, as long as the user is looking in the direction in which the user needs to look during driving, such an act is not determined as looking-aside, and thus there is a problem in that a necessary warning is not given.

In view of the foregoing, for an area to which a line of sight of the driver may be directed due to driving behavior of the driver, unlike another area, it is desirable to determine looking-aside in consideration of whether the line of sight is directed due to the driving behavior of the driver.

Thus, an objective of the present invention is to provide a driving assistance device that can accurately assist in driving by a driver by determining looking-aside of the driver according to a characteristic of an area to which a line of sight of the driver is directed.

### [SOLUTION TO PROBLEM]

A summary of the present disclosure is as follows.
(1) A driving assistance device includes:
   a line-of-sight estimation unit that estimates a direction of a line of sight of a driver of a vehicle;
   a first looking-aside determination unit that determines whether the driver is looking aside, based on predetermined determination logic, when a line of sight of the driver is directed to a first looking-aside area deviating from a vehicle traveling direction; and
   a second looking-aside determination unit that determines whether the driver is looking aside, based on predetermined determination logic different from the predetermined determination logic of the first looking-aside determination unit, when a line of sight of the driver is directed to a second looking-aside area deviating from a vehicle traveling direction.
(2) The driving assistance device according to (1) described above, wherein
   the first looking-aside determination unit determines whether the driver is looking aside, based on both of first determination logic that determines continuous looking-aside of the driver, and second logic that determines intermittent looking-aside of the driver, and
   the second looking-aside determination unit determines whether the driver is looking aside, based on only the first determination logic that determines continuous looking-aside of the driver.
(3) The driving assistance device according to (1) described above, wherein
   the first looking-aside determination unit determines that the driver is looking aside when a line of sight of the driver is continuously directed to the first looking-aside area for a first predetermined time or longer, and also determines that the driver is looking aside when a line of sight of the driver is directed to the first looking-aside area for a predetermined accumulated time or longer or a predetermined proportion or more in total within a second predetermined time, and
   the second looking-aside determination unit determines that the driver is looking aside when a line of sight of the driver is continuously directed to the second looking-aside area for the first predetermined time or longer.
(4) The driving assistance device according to any one of (1) to (3) described above, wherein
   the second looking-aside area is an area to which a line of sight of the driver is directed due to driving behavior of the driver.
(5) The driving assistance device according to any one of (1) to (4) described above further includes
   a warning processing unit that executes processing for warning the driver when the first looking-aside determination unit or the second looking-aside determination unit determines that the driver is looking aside.

### [ADVANTAGEOUS EFFECTS OF INVENTION]

The present invention achieves an effect capable of providing a driving assistance device that can accurately assist in driving by a driver by determining looking-aside of the driver according to a characteristic of an area to which a line of sight of the driver is directed.

### BRIEF DESCRIPTION OF DRAWINGS

FIG. 1 is a schematic configuration diagram of a driving assistance system according to one embodiment.
FIG. 2 is a diagram illustrating a state when viewed from the inside of a compartment in a traveling direction of a vehicle, and is a schematic diagram illustrating a visual recognition area of a driver.
FIG. 3 is a schematic diagram illustrating a functional block of a processor of an ECU.
FIG. 4 is a flowchart illustrating processing executed by the processor of the ECU for each predetermined control cycle.
FIG. 5 is a flowchart illustrating processing of long-time looking-aside determination logic in step S16 in FIG. 4.
FIG. 6 is a flowchart illustrating processing of glancing-aside determination logic in step S14 in FIG. 4.

### DESCRIPTION OF EMBODIMENTS

Hereinafter, several embodiments according to the present invention will be described with reference to drawings. However, the description is intended to be merely an exemplification of a preferable embodiment of the present invention, and does not intend the present invention to be limited to such a specific embodiment.

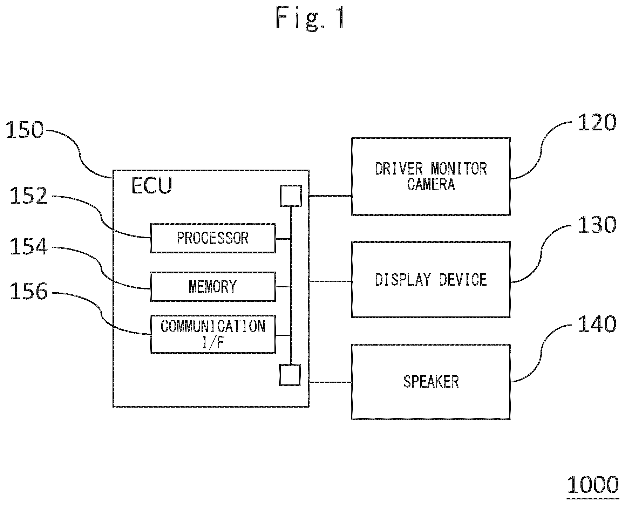

FIG. 1 is a schematic configuration diagram of a driving assistance system 1000 according to one embodiment. The driving assistance system 1000 is installed in, for example, a vehicle such as a car, and includes a driver monitor camera 120, a display device 130, a speaker 140, and an electronic control unit (ECU, hereinafter referred to as an ECU) 150. Each of the driver monitor camera 120, the display device 130, the speaker 140, and the ECU 150 is connected via an in-vehicle network conforming to a standard such as a controller area network (CAN).

The driver monitor camera 120 includes a two-dimensional detector configured with an array of photoelectric conversion elements having sensitivity to visible light, such as a CCD or a C-MOS, and an imaging optical system that forms an image of a region being a capturing target on the two-dimensional detector. The driver monitor camera 120 is provided on a steering column, a dashboard or in the vicinity of a windshield, and the like in a vehicle in such a way as to face an assumed position of a driver, captures a face of the driver, and generates an image in which the face of the driver is captured. In the present embodiment, the driver monitor camera 120 is assumed to be provided on the steering column. The driver monitor camera 120 performs capturing for each predetermined capturing cycle (for example, 1/30 seconds to 1/10 seconds). Every time the driver monitor camera 120 generates an image, the driver monitor camera 120 outputs the generated image to the ECU 150 via the in-vehicle network.

The display device 130 is formed of, for example, a liquid crystal display (LCD), is provided in the vicinity of a meter panel or a dashboard and the like, and displays various types of information. The speaker 140 outputs various types of information by way of sound.

The ECU 150 is a component that controls the entire driving assistance system 1000, and is one aspect of a driving assistance device. The ECU 150 includes a processor 152, a memory 154, and a communication interface 156. The processor 152 includes one or a plurality of central processing units (CPUs) and a peripheral circuit thereof. The processor 152 may further include another arithmetic circuit such as a logical arithmetic unit, a numerical arithmetic unit, or a graphic processing unit. The memory 154 includes, for example, a volatile semiconductor memory and a non-volatile semiconductor memory, and stores data related to processing according to the present embodiment as necessary. Three-dimensional position information indicating a boundary of a looking-aside area, a front area, and a glancing-aside exclusion area described below is stored in the memory 154. The communication interface 156 includes an interface circuit for connecting the ECU 150 to the in-vehicle network.

The driving assistance system 1000 detects a line of sight of the driver by way of the driver monitor camera 120, issues a warning when the driver is looking aside, and thus suppresses looking-aside of the driver. More specifically, the driving assistance system 1000 sets a looking-aside area in a visual recognition area of the driver, and classifies looking-aside of the driver into long-time looking-aside and glancing-aside (short-time and intermittent non-front gazing) according to a time during which the driver is looking aside when a line of sight of the driver is directed to the looking-aside area.

Long-time looking-aside and glancing-aside are determined by different determination logic. Specifically, long-time looking-aside is determined when the driver is continuously looking aside for a certain predetermined time or longer (for example, three seconds or longer, five seconds or longer, and the like), and glancing-aside is determined when the driver is looking aside for a predetermined accumulated time or longer (for example, five seconds or longer) or a predetermined proportion or more (for example, 50% or more) in total within a certain predetermined time (for example, for 10 seconds). It should be noted that long-time looking-aside is not limited to a case where the driver is looking at the same place while the driver is looking aside, and may also include a case where a line of sight moves to a different place while the driver is looking aside. The same also applies to glancing-aside.

Then, the driving assistance system 1000 issues a warning to the driver when the driver is in long-time looking aside or glancing aside. In this way, the driving assistance system 1000 prompts the driver to direct a line of sight forward, and assists in safe driving.

In this way, for example, for both of a case where the driver is continuously looking out a vehicle window for a relatively long time, and a case where the driver is intermittently glancing at a portable terminal kept at hand, a warning is given to the driver by determining both of long-time looking-aside and glancing-aside. In particular, by making determination of glancing-aside, a warning is given even in a case that does not correspond to long-time looking-aside, and thus safe driving by the driver is more reliably assisted.

Long-time looking-aside is a state wherein the driver is looking aside for a relatively long time, and thus the driving assistance system 1000 always gives a warning when the driver is looking aside for a long time. On the other hand, with regard to glancing-aside, in a case where glancing-aside is caused by driving behavior of the driver, when a warning is issued for all short-time and intermittent non-front gazing, the driver may feel discomfort and distrust. For example, when the driver is glancing at a door mirror, glancing at the door mirror is normal driving behavior for safety confirmation, and thus the driver may feel discomfort and distrust from a warning issued in such a case.

Thus, the driving assistance system 1000 according to the present embodiment does not give a warning to the driver as an exception in a case where glancing-aside is caused by driving behavior, even when the driver is glancing aside.

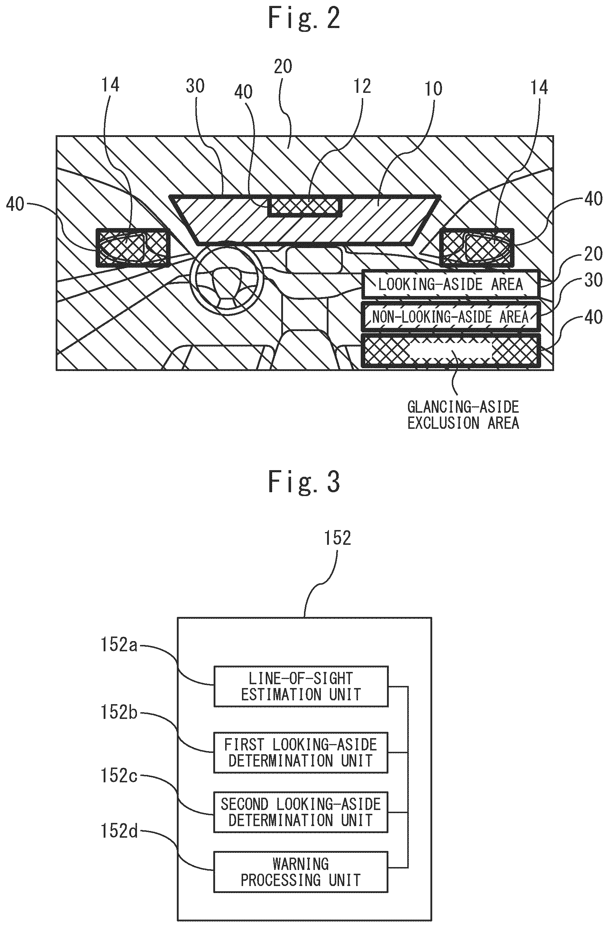

FIG. 2 is a diagram illustrating a state when viewed from the inside of a compartment in a traveling direction of a vehicle, and is a schematic diagram illustrating a visual recognition area of a driver. As illustrated in FIG. 2, a windshield 10 is provided in the traveling direction of the vehicle, and an inner mirror 12 is provided in a part of a region of the windshield 10. Further, a door mirror 14 is provided on the left and the right of the vehicle.

In order to determine long-time looking-aside and glancing-aside, as illustrated in FIG. 2, a visual recognition area of the driver is classified into a looking-aside area 20 and a front area (non-looking-aside area) 30. The looking-aside area 20 is an area deviating from the vehicle traveling direction, and includes all regions other than the region of the windshield 10, and a region of the inner mirror 12. The front area 30 is basically the region of the windshield 10, but a region excluding the region of the inner mirror 12.

A glancing-aside exclusion area 40 is provided over the looking-aside area 20 in an overlapping manner in the looking-aside area 20. As illustrated in FIG. 2, the glancing-aside exclusion area 40 includes regions of the inner mirror 12 and the door mirror 14, and the glancing-aside exclusion area 40 is an area to which a line of sight of the driver is directed due to normal driving behavior of the driver.

The driving assistance system 1000 does not make determination of glancing-aside as an exception in a case where a line of sight of the driver is directed to the glancing-aside exclusion area 40 even when the line of sight is directed to the looking-aside area 20. In this way, for example, when the driver is glancing at the inner mirror 12 or the door mirror 14, glancing-aside is not determined, a warning to the driver is not given, and thus discomfort and distrust caused in the driver are suppressed.

On the other hand, the looking-aside area 20 other than the glancing-aside exclusion area 40 is a region to which a line of sight is not directed due to normal driving behavior of the driver. The driving assistance system 1000 makes determination of glancing-aside when a line of sight of the driver is directed to the looking-aside area 20 other than the glancing-aside exclusion area 40, and gives a warning to the driver when it is determined that the driver is glancing aside. In this way, a warning is given for glancing-aside that is not caused by driving behavior of the driver as in a case where the driver is glancing at a portable terminal kept at hand.

As described above, the driving assistance system 1000 changes logic that determines looking-aside, according to whether a line of sight of the driver is directed to the glancing-aside exclusion area 40 or an area other than the glancing-aside exclusion area 40 when the line of sight is directed to the looking-aside area 20. Then, when the line of sight is directed to the glancing-aside exclusion area 40, determination of glancing-aside is not made, and thus an unnecessary warning is not given for normal driving behavior of the driver, and discomfort and distrust caused in the driver are suppressed. On the other hand, when the line of sight of the driver is directed to the looking-aside area 20 other than the glancing-aside exclusion area 40, determination of glancing-aside is made, and thus a warning is given for an act that is not caused by normal driving behavior of the driver, for example, an act of glancing at a portable terminal, and the like. Therefore, a warning when the driver is looking aside is achieved with high accuracy.

Further, even when a line of sight of the driver is directed to the glancing-aside exclusion area 40, determination of long-time looking-aside is made, and thus a warning is issued in a case where, for example, the driver continuously keeps looking at the door mirror 14 for a long time. Therefore, even in a case where a line of sight of the driver is directed to the glancing-aside exclusion area 40, when the case is not caused by normal driving behavior, safety is guaranteed by issuing a warning.

FIG. 3 is a schematic diagram illustrating a functional block of a processor a of the ECU 150 for achieving the processing as described above. The processor 152 of the ECU 150 includes a line-of-sight estimation unit 152a, a first looking-aside determination unit 152b, a second looking-aside determination unit 152c, and a warning processing unit 152d. Each of the units included in the processor 152 is, for example, a functional module achieved by a computer program operating on the processor 152. In other words, a functional block of the processor 152 is formed of the processor 152 and a program (software) for causing the processor 152 to function. Further, the program may be recorded in the memory 154 included in the ECU 150 or a recording medium connected from the outside. Alternatively, each of the units included in the processor 152 may be a dedicated arithmetic circuit provided in the processor 152.

The line-of-sight estimation unit 152a of the processor 152 detects a line of sight of a driver by a known line-of-sight detection method, based on an image that is generated by a driver monitor camera and indicates a face of the driver. For example, the line-of-sight estimation unit 152a uses a reflected image (Purkinje image) of a near infrared light source on a cornea surface, and detects a line of sight by using a cornea reflection method for calculating a line-of-sight angle from a distance between a pupil center and a Purkinje image. Then, the line-of-sight estimation unit 152a estimates a direction to which the line of sight of the driver is directed, based on the detected line-of-sight direction, and three-dimensional position information indicating a boundary of the looking-aside area 20, the front area 30, and the glancing-aside exclusion area 40 previously stored in the memory 154. Specifically, the line-of-sight estimation unit 152a estimates whether the line of sight of the driver is directed to either the looking-aside area 20 or the front area. Further, the line-of-sight estimation unit 152a estimates whether the line of sight of the driver is directed to the glancing-aside exclusion area 40 when it is determined that the line of sight is directed to the looking-aside area 20. It should be noted that the detection method of a line-of-sight direction described above is one example, and the line-of-sight estimation unit 152a may detect a line-of-sight direction by using another method.

It should also be noted that the line-of-sight estimation unit 152a detects a position of an eye that is a starting point of the line of sight of the driver, a position or a contour of various components of a face of the driver, or the like by inputting an image being previously learned to a discriminator. For example, the line-of-sight estimation unit 152a can use, as such a discriminator, a segmentation discriminator being previously learned in such a way as to output, from an input image for each pixel of the image, a likelihood that an object having a possibility of being indicated by the pixel is indicated by the pixel, for each kind of the object, and to identify that the object having a maximum likelihood is indicated. The line-of-sight estimation unit 152a can use, as such a discriminator, a deep neural network (DNN) having an architecture of a segmentation convolutional neural network (CNN) such as a fully convolutional network (FCN), for example. Alternatively, the line-of-sight estimation unit 152a may use a segmentation discriminator according to another machine learning technique, such as Random Forest or a support vector machine. In this case, the line-of-sight estimation unit 152a determines a pixel in which various components are captured in an image by inputting the image to the segmentation discriminator. Then, the line-of-sight estimation unit 152a sets a group of images in which an element of the same kind is captured as a region indicating the element.

Instead of detecting a line-of-sight direction of the driver, the line-of-sight estimation unit 152a may detect a face orientation angle of the driver, based on information acquired from the discriminator described above, and estimate whether a line of sight of the driver is directed to any of the looking-aside area 20, the front area 30, and the glancing-aside exclusion area 40, based on the face orientation angle, and three-dimensional position information indicating a boundary of the looking-aside area 20, the front area 30, and the glancing-aside exclusion area 40 previously stored in the memory 154. For example, the line-of-sight estimation unit 152a may calculate a left-right face orientation angle (yaw angle), based on a distance between left and right eyes, and may calculate an up-down face orientation angle (pitch angle), based on a distance between a nose position and a straight line connecting positions of the left and right eyes.

The first looking-aside determination unit 152b of the processor 152 determines whether the driver is looking aside, based on predetermined determination logic, when the line of sight of the driver is directed to a first looking-aside area deviating from a vehicle traveling direction, based on a direction to which the line of sight estimated by the line-of-sight estimation unit 152a is directed.

More specifically, the first looking-aside area is an area excluding the glancing-aside exclusion area 40 from the looking-aside area 20. The first looking-aside determination unit determines whether the driver is looking aside, based on both of first determination logic (long-time looking-aside determination logic) that determines continuous looking-aside of the driver, and second logic (glancing-aside determination logic) that determines intermittent looking-aside of the driver. The first looking-aside determination unit 152b may determine that the driver is looking aside for a long time when a line of sight is continuously directed to the first looking-aside area for a first predetermined time or longer, based on the long-time looking-aside determination logic. Further, the first looking-aside determination unit 152b may determine that the driver is glancing aside when a line of sight is directed to the first looking-aside area for a predetermined accumulated time or longer or a predetermined proportion or more in total within a second predetermined time, based on the glancing-aside determination logic.

The second looking-aside determination unit 152c of the processor 152 determines whether the driver is looking aside, based on predetermined determination logic different from that of the first looking-aside determination unit 152b, when the line of sight of the driver is directed to a second looking-aside area deviating from a vehicle traveling direction, based on a direction to which the line of sight estimated by the line-of-sight estimation unit 152a is directed.

More specifically, the second looking-aside area is the glancing-aside exclusion area 40. The second looking-aside determination unit 152c determines whether the driver is looking aside, based on only the first determination logic (long-time looking-aside determination logic) that determines continuous looking-aside of the driver. The second looking-aside determination unit 152c may determine that the driver is looking aside for a long time when a line of sight is continuously directed to the second area for the first predetermined time or longer, based on the long-time looking-aside determination logic. In this way, the second looking-aside determination unit 152c determines whether the driver is looking aside, based on only the long-time looking-aside determination logic without performing the glancing-aside determination logic.

It should be noted that the long-time looking-aside determination logic and the glancing-aside determination logic are not limited to the logic described above. For example, the glancing-aside determination logic may determine that the driver is glancing aside when a line of sight is continuously directed to the first looking-aside area for a third predetermined time or longer by a method similar to that of the long-time looking-aside determination logic, and, in this case, the third predetermined time may be set shorter than the first predetermined time of the long-time looking-aside determination logic.

The warning processing unit 152d of the processor 152 executes processing for warning the driver when the first looking-aside determination unit 152b or the second looking-aside determination unit 152c determines that the driver is looking aside. Specifically, the warning processing unit 152d executes processing of displaying a warning on the display device 130, or processing of outputting a warning from the speaker 140 by a sound.

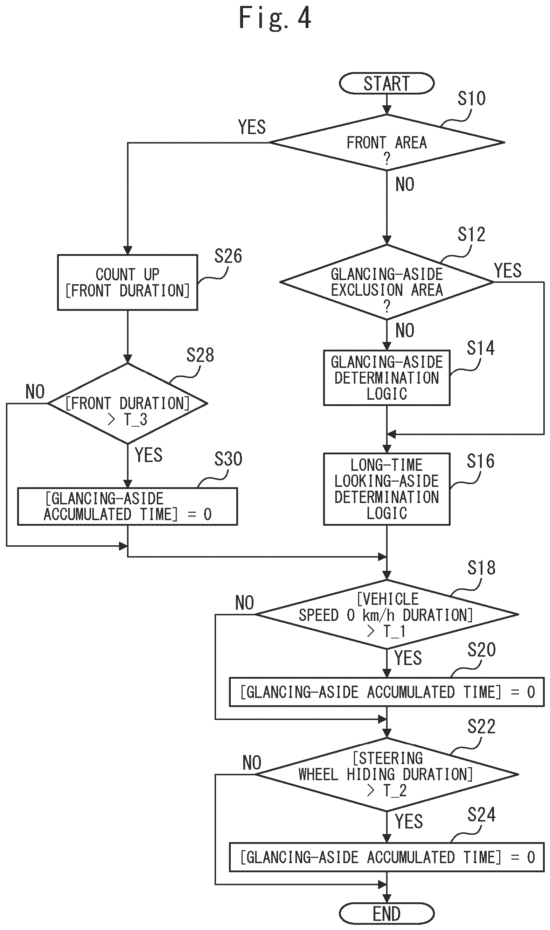

Next, the processing executed by the processor 152 of the ECU 150 will be described. FIG. 4 is a flowchart illustrating the processing executed by the processor 152 of the ECU 150 for each predetermined control cycle. First, the line-of-sight estimation unit 152a estimates whether a line of sight of a driver is directed to the front area 30 (step S10). When the line of sight of the driver is not directed to the front area 30, it is estimated that the line of sight of the driver is directed to the looking-aside area 20. In this case, the line-of-sight estimation unit 152a further estimates whether the line of sight of the driver is directed to the glancing-aside exclusion area 40 (step S12).

It should be noted that the driver monitor camera 120 is installed on the steering column, and thus a visual field of the driver monitor camera 120 may be blocked by a spoke of a steering wheel depending on an angle position of the steering wheel. In step S10, when the visual field of the driver monitor camera 120 is blocked by the spoke of the steering wheel, the line-of-sight estimation unit 152a may estimate that the line of sight of the driver is directed to the front area 30.

When the line of sight of the driver is not directed to the glancing-aside exclusion area 40 in step S12, it is estimated that the line of sight of the driver is directed to the area excluding the glancing-aside exclusion area 40 from the looking-aside area 20, i.e., the first looking-aside area. Thus, the first looking-aside determination unit 152b executes the glancing-aside determination logic (step S14). Next, the first looking-aside determination unit 152b executes the long-time looking-aside determination logic (step S16).

On the other hand, when it is estimated that the line of sight of the driver is directed to the glancing-aside exclusion area 40 in step S12, the line of sight of the driver is directed to the second looking-aside area. Thus, the second looking-aside determination unit 152c executes the long-time looking-aside determination logic (step S16). In this way, when the line of sight of the driver is directed to the glancing-aside exclusion area 40, the glancing-aside determination logic in step S14 is not executed, and only the long-time looking-aside determination logic in step S16 is executed.

In this way, when the line of sight of the driver is directed to the glancing-aside exclusion area 40, the glancing-aside determination logic is not executed, and thus a warning issued to the driver due to normal driving behavior is suppressed. Therefore, discomfort and distrust caused in the driver are suppressed.

On the other hand, even when the line of sight of the driver is directed to the glancing-aside exclusion area 40, the long-time looking-aside determination logic is executed in step S16, and thus a warning is issued in a case where, for example, the driver continuously keeps looking at the door mirror 14 for a long time. Therefore, even in a case where the line of sight of the driver is directed to the glancing-aside exclusion area 40, when the case is not caused by normal driving behavior, safety is guaranteed by issuing a warning.

After step S16, whether a duration during which a vehicle speed is 0 [km/h] exceeds a predetermined time T_1 is determined (step S18), and, when the duration during which the vehicle speed is 0 [km/h] exceeds T_1, a glancing-aside accumulated time is reset to 0 (step S20). As described below, the glancing-aside accumulated time is used in the glancing-aside determination logic in step S14, and, when the glancing-aside accumulated time is equal to or longer than a predetermined accumulated time, a warning is issued to the driver. The glancing-aside accumulated time is reset to 0 in step S20, and thus a warning of glancing-aside given to the driver in a state where the driver is not driving a vehicle is suppressed.

Further, as described above, the visual field of the driver monitor camera 120 may be blocked by the spoke of the steering wheel depending on an angle position of the steering wheel. Thus, whether a duration in a state where the visual field of the driver monitor camera 120 is hidden by the steering wheel exceeds a predetermined time T_2 is determined (step S22), and, when the duration exceeds T_2, a glancing-aside accumulated time is reset to 0 (step S24). In this way, a warning of glancing-aside given to the driver in a state where the line of sight of the driver cannot be accurately estimated is suppressed. After step S24, the processing in the present control cycle ends.

Further, when it is estimated that the line of sight of the driver is directed to the front area 30 in step S10, a time (front duration) during which the line of sight of the driver is continuously directed to the front area 30 is counted up (step S26), and, when the front duration exceeds a predetermined time T_3 (YES in step S28), a glancing-aside accumulated time is reset to 0 (step S30). After step S30, the processing proceeds to step S18.

On the other hand, when the front duration does not exceed the predetermined time T3 in step S28, the processing in step S30 is not executed, and the processing proceeds to step S18.

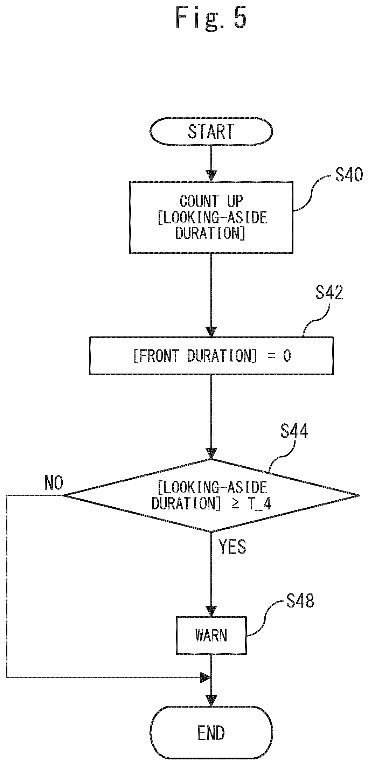

FIG. 5 is a flowchart illustrating the processing of the long-time looking-aside determination logic in step S16 in FIG. 4. First, a time (looking-aside duration) during which the line of sight of the driver is continuously directed to the looking-aside area 20 is counted up (step S40), and a front duration is reset to 0 (step S42).

Next, whether the looking-aside duration is equal to or longer than a first predetermined time T_4 is determined (step S44), and, when the looking-aside duration is equal to or longer than T_4, long-time looking-aside is determined. In this case, processing for warning the driver by the warning processing unit 152d is executed (step S48). On the other hand, when the looking-aside duration is shorter than T_4 in step S44, the processing in the present control cycle ends.

As described above, in the long-time looking-aside determination logic, when a line of sight of a driver is not directed to the front area 30, a looking-aside duration during which the line of sight of the driver is continuously directed to the looking-aside area 20 is counted up, and long-time looking-aside is determined in a case where the looking-aside duration is equal to or longer than the first predetermined time T_4. The looking-aside duration is a time during which the line of sight of the driver is continuously directed to the looking-aside area 20, and thus, when the line of sight of the driver is directed to the front area 30 in a subsequent control cycle, counting up the looking-aside duration is stopped and the looking-aside duration is reset to 0.

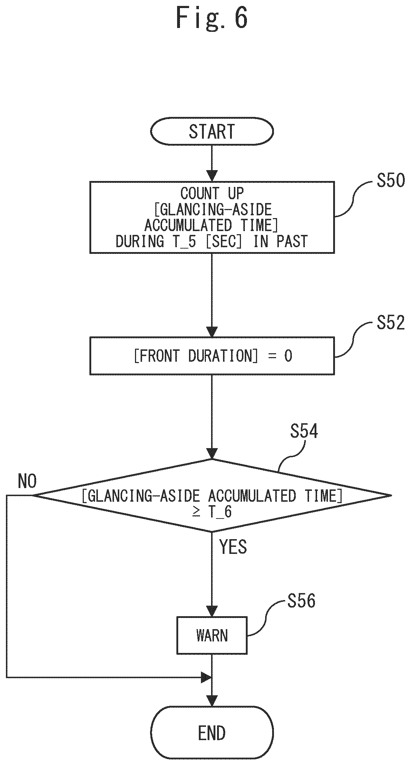

FIG. 6 is a flowchart illustrating the processing of the glancing-aside determination logic in step S14 in FIG. 4. First, a glancing-aside accumulated time in a second predetermined time T_5 [sec] in the past is counted up (step S50), and a front duration is reset to 0 (step S52).

Next, whether the glancing-aside accumulated time is equal to or longer than a predetermined accumulated time T_6 is determined (step S54), and, when the glancing-aside accumulated time is equal to or longer than T_6, glancing-aside is determined. In this case, processing for warning the driver by the warning processing unit 152d is executed (step S56). On the other hand, when the glancing-aside accumulated time is shorter than T_6 in step S54, the processing in the present control cycle ends.

As described above, in the glancing-aside determination logic, when a line of sight of a driver is not directed to the front area 30, and is not directed to the glancing-aside exclusion area 40, a glancing-aside accumulated time is counted up, and glancing-aside is determined in a case where the glancing-aside accumulated time is equal to or longer than the predetermined accumulated time T_6. When the line of sight of the driver is directed to the front area 30 in a subsequent control cycle, or the line of sight is directed to the glancing-aside exclusion area 40, counting up the glancing-aside accumulated time is stopped and the glancing-aside accumulated time is held in the memory 154, but the glancing-aside accumulated time is reset to 0 in a case where the processing proceeds to any of steps S20, S24, and S30 in FIG. 4.

It should be noted that the warning processing unit 152d may change intensity of a warning between step S48 in FIG. 5 and step S56 in FIG. 6, and may set higher intensity of the warning (step S48) in a case where long-time looking-aside is determined than intensity of the warning (step S56) in a case where glancing-aside is determined. For example, the warning processing unit 152d may set a larger size of a warning display displayed on the display device 130 in a case where long-time looking-aside is determined than a size in a case where glancing-aside is determined, and may set a higher volume level of a sound output from the speaker 140.

It should also be noted that T_3 in step S28 may be set to a greater value when glancing-aside is determined, a warning to a driver is given, and then it is estimated that a line of sight of the driver is directed to the front area 30 in a next control cycle (YES in step S10 in FIG. 4). In this way, a longer time is required until a glancing-aside accumulated time is reset to 0 after glancing-aside is determined. Therefore, in a case where, for example, the driver is glancing at a portable terminal, a glancing-aside accumulated time is less likely to be reset to 0 in step S30 even when a motion of intentionally moving a line of sight back to the front area 30 is performed in order to avoid a warning. In this way, even when the driver performs such a motion, a probability that glancing-aside is determined is higher, and an intentional act for avoiding a warning is prevented beforehand.

As described above, according to the present embodiment, the driving assistance system 1000 changes logic that determines looking-aside, according to whether a line of sight of a driver is directed to the glancing-aside exclusion area 40 or an area other than the glancing-aside exclusion area 40 when the line of sight is directed to the looking-aside area 20. Then, the driving assistance system 1000 does not make determination of glancing-aside as an exception in a case where the line of sight of the driver is directed to the glancing-aside exclusion area 40 even when the line of sight is directed to the looking-aside area 20. In this way, when the line of sight of the driver is glancing at the inner mirror 12 or the door mirror 14 in the glancing-aside exclusion area 40 due to normal driving behavior, glancing-aside is not determined, a warning to the driver is not given, and thus discomfort and distrust caused in the driver are suppressed.

### REFERENCE SIGNS LIST

10 Windshield
12 Inner mirror
14 Door mirror
20 Looking-aside area
30 Front area (non-looking-aside area)
40 Glancing-aside exclusion area
120 Driver monitor camera
130 Display device
140 Speaker
150 Electronic control unit (ECU)
152 Processor
152a Line-of-sight estimation unit
152b First looking-aside determination unit
152c Second looking-aside determination unit
152d Warning processing unit
154 Memory
156 Communication interface
1000 Driving assistance system

## Claims

1. A driving assistance device, comprising:
a line-of-sight estimation unit that estimates a direction of a line of sight of a driver of a vehicle;
a first looking-aside determination unit that determines whether the driver is looking aside, based on predetermined determination logic, when a line of sight of the driver is directed to a first looking-aside area deviating from a vehicle traveling direction; and
a second looking-aside determination unit that determines whether the driver is looking aside, based on predetermined determination logic different from the predetermined determination logic of the first looking-aside determination unit, when a line of sight of the driver is directed to a second looking-aside area deviating from a vehicle traveling direction.

2. The driving assistance device according to claim 1, wherein
the first looking-aside determination unit determines whether the driver is looking aside, based on both of first determination logic that determines continuous looking-aside of the driver, and second logic that determines intermittent looking-aside of the driver, and
the second looking-aside determination unit determines whether the driver is looking aside, based on only the first determination logic that determines continuous looking-aside of the driver.

3. The driving assistance device according to claim 1, wherein
the first looking-aside determination unit determines that the driver is looking aside when a line of sight of the driver is continuously directed to the first looking-aside area for a first predetermined time or longer, and also determines that the driver is looking aside when a line of sight of the driver is directed to the first looking-aside area for a predetermined accumulated time or longer or a predetermined proportion or more in total within a second predetermined time, and
the second looking-aside determination unit determines that the driver is looking aside when a line of sight of the driver is continuously directed to the second looking-aside area for the first predetermined time or longer.

4. The driving assistance device according to any one of claims 1 to 3, wherein
the second looking-aside area is an area to which a line of sight of the driver is directed due to driving behavior of the driver.

5. The driving assistance device according to any one of claims 1 to 3, further comprising
a warning processing unit that executes processing for warning the driver when the first looking-aside determination unit or the second looking-aside determination unit determines that the driver is looking aside.
